# EUROPÄISCHE PATENTSCHRIFT

(11) **EP 3 974 251 B1**
(45) Veröffentlichungstag und Bekanntmachung des Hinweises auf die Patenterteilung: **29.11.2023**
(21) Anmeldenummer: 20198464.8
(22) Anmeldetag: 25.09.2020
(51) Int. Cl.: B60P 3/00, B65G 1/04

(54) **ZUSTELLFAHRZEUG**
DELIVERY VEHICLE
VÉHICULE DE LIVRAISON

(43) Veröffentlichungstag der Anmeldung: 30.03.2022
(73) Patentinhaber: Jungheinrich Aktiengesellschaft, 22047 Hamburg (DE)
(72) Erfinder: Seemüller, Stefan, 85716 Unterschleißheim (DE); Skof, Markus, 8434 Tillmitsch (AT); Cremer, Holger, 40211 Düsseldorf (DE); Alberg, Anatolij, 64319 Pfungstadt (DE)
(74) Vertreter: Keil & Schaafhausen Patentanwälte PartGmbB

(56) Entgegenhaltungen:
- EP-A1- 0 484 673
- DE-U1-202006 002 326
- US-A1- 2013 024 392
- US-A1- 2017 291 766

## Beschreibung

Die Erfindung betrifft ein Zustellfahrzeug mit wenigstens einem Transportraum zur Aufnahme von wenigstens einem Behälter und einer Beschickungsreinrichtung.

US 2017/0291766 A1 beschreibt ein Zustellfahrzeug, dessen Transportraum mit Regalen beschickt werden kann. Diese Regale können durch eine Verstelleinrichtung bewegt werden, wobei die Regale durch die Verstelleinrichtung in Fahrtrichtung und quer zur Fahrtrichtung bewegt werden können. Auf Regalböden sind Pakete angeordnet. Die Regalböden werden an dem Regal durch eine formschlüssige Verbindung angebracht. Es können auch Regalböden weggelassen werden, um höheren Paketen Platz zu bieten. Auf die Regalböden kann ausgehend von einem Laderaum zugegriffen werden. Dabei kann auf jeden Regalboden eines in der Ladeposition befindlichen Regals zugegriffen werden.

DE 20 2006 002 326 U1 zeigt ein Kistenstapellager und eine Halteklinke für ein Kistenstapellager. Dabei werden Kisten übereinandergestapelt gelagert. Das Kistenstapellager weist Halteklinken auf, durch die die unterste Kiste eines Kistenstapels an zwei gegenüberliegenden Kistenseiten gehalten werden. Dabei sind jeder Kistenseite vier Halteklinken zugeordnet, die einzeln quer zu einer Kistenwand der betreffenden Kistenseite beweglich gelagert sind und welche zur Entnahme einer durch die Halteklinken gehaltene Kiste aus dem Kistenstapellager synchronisiert ansteuerbar sind. Die Kisten werden über ein Transportband und eine Beschickungseinrichtung ein- und ausgelagert.

US 2013/0024392A1 beschreibt ein Zustellfahrzeug und einem dazugehörigen Verfahren. Dabei weist ein Transportraum des Zustellfahrzeuges mehrere Gestelle auf, wobei die Gestelle Begrenzungen für Regalböden bilden. Die Regalböden können auseinandergezogen und zusammengezogen werden.

EP 0 484 673 A1 beschreibt ein Transportfahrzeug, das eine Fahrerkabine und einen von dieser abgetrennten Transportbereich umfasst. Aus dem Transportbereich können Gegenstände über eine Schleuse entnommen werden. Die Entnahme kann vorzugs-weise auch nur dann erfolgen, wenn sich das Transportfahrzeug an vorher festgelegten Orten befindet.

Weiterhin betrifft die Erfindung ein Verfahren zum Einlagern und Auslagern von Behältern in einem Zustellfahrzeug

Ein Zustellfahrzeug ist ein Fahrzeug, das von beispielsweise Paketzusteller oder anderen Logistikdienstleistern benutzt wird, um Pakete oder anderes Transportgut zu transportieren. Gewöhnlich werden Pakete, Transportgüter oder dergleichen durch Zustellfahrzeuge ausgeliefert bzw. eingesammelt. Das Zustellfahrzeug weist einen Transportraum auf, der beispielsweise in Fahrtrichtung hinter einer Fahrerkabine angeordnet ist. Dieser Transportraum kann durch eine Öffnung, eine Tür oder dergleichen mit der Fahrerkabine verbunden sein, wodurch ein Fahrer, ein Mitfahrer oder weitere Personen von der Fahrerkabine in den Transportraum gelangen können. Weiterhin kann der Transportraum wenigstens eine Tür aufweisen, die einen Zugang von außen, der Umgebung, zu dem Transportraum ermöglicht. In dem Transportraum können Regale zur Aufnahme von Paketen, Behältern oder sonstiger Transportgüter angeordnet sein.

Bekannte Zustellfahrzeug haben in einem Transportraum mehrere Regalanordnungen, auf denen Transportgut, beispielsweise Pakete, zum Transport abgestellt und gesichert werden können. Diese Regalanordnungen sind gewöhnlich an Wänden des Transportraumes angeordnet, sodass in der Mitte des Transportraumes keine Regalanordnung, sondern ein Freiraum vorgesehen ist. Der Freiraum wird benötigt, damit ein Zusteller oder Paketbote an die Regalanordnung gelangen kann, um Pakete zu entnehmen. Folglich kann in der Mitte des Transportraumes Transportgut nur auf dem Boden des Transportraumes gelagert werden. Es ist möglich Pakete auf dem Boden zu stapeln, jedoch besteht die Gefahr, dass man Pakete umstapeln muss um an ein untenliegendes Paket zu gelangen. Ein Umstapeln ist mit einem hohen Zeitaufwand verbunden. Weiterhin kann auf dem Boden liegendes Transportgut nur schwer gegen Verrutschen gesichert werden.

Es ist die Aufgabe der vorliegenden Erfindung die Effizienz des Zustellfahrzeuges zu erhöhen.

Diese Aufgabe wird durch die Merkmale des Anspruchs 1 gelöst.

Ein Blocklager bzw. eine Blocklageranordnung beschreibt eine Lageranordnung mit wenigstens einem Behälterstapelraum zur Aufnahme eines Behälterstapels. Der Behälterstapel ist eine Anordnung von mehreren Behältern, die in vertikaler Richtung (Schwerkraftrichtung) gestapelt sind. Weiterhin weist das Blocklager einen Beschickungsraum auf, der in Schwerkraftrichtung oberhalb oder unterhalb des Behälterstapelraums vorgesehen ist.

In dem Beschickungsraum kann eine bewegbare Beschickungseinrichtung mit einer Hubeinheit vorgesehen sein, wobei die Beschickungseinrichtung zum vertikalen Einlagern und Auslagern von Behältern in und aus einem Behälterstapelraum dient. Ist der Beschickungsraum oberhalb des Behälterstapelraums angeordnet, so werden Behälter in Schwerkraftrichtung in den Behälterstapelraum eingelagert und entgegen der Schwerkraftrichtung ausgelagert. Wenn der Beschickungsraum unterhalb des Behälterstapelraums angeordnet ist, ist die Einlagerrichtung entgegen der Schwerkraftrichtung und die Auslagerrichtung in Schwerkraftrichtung.

Neben dem Behälterstapelraum und dem Beschickungsraum weist das Blocklager eine Einlager- und/oder Auslagerstation auf. Durch die Einlager- und/oder Auslagerstation können Behälter in das Blocklager überführt werden bzw. aus dem Blocklager entnommen werden. Alternativ dazu kann an der Einlager- und/oder Auslagerstation auf das Innere eines Behälters zugegriffen werden, ohne dass der Behälter aus der Einlager- und/oder Auslagerstation entnommen werden muss.

Das Blocklager ermöglicht eine hohe Raumausnutzung. Die Behälterstapel können einen Großteil des Transportraumes einnehmen wobei gleichzeitig sichergestellt wird, dass auf jeden Behälter des Blocklagers zugegriffen werden kann.

Der Fahrer des Zustellfahrzeuges, der in der Regel gleichzeitig auch Zusteller der Pakete ist, kann ein Paket aus dem Behälter entnehmen, der zur Einlager- und/oder Auslagerstation überführt wurde, sodass ein Suchen des passenden Paketes entfällt. Weiterhin kann durch das Blocklager ein Ordnungssystem in den Transportraum eingeführt werden, wodurch eine erhöhte Effizienz ermöglicht wird. Weiterhin sind die Pakete gegen Verrutschen und Umfallen gesichert.

Vorzugsweise ist der Beschickungsraum in Schwerkraftrichtung unter dem Behälterstapelraum angeordnet. Durch diese Anordnung kann der Behälterstapelraum von unten beschickt werden, wodurch der Stapel aus Behältern durch jeden neuen Behälter von unten nach oben wächst. Weiterhin wird durch den Beschickungsraum der Behälterstapel wieder abgebaut, d.h. jeweils ein unterer Behälter wird nach unten hin entnommen. Die Schwerkraft bewegt die Behälter, aus denen der Behälterstapel gebildet ist nach unten. Wenn nur ein Behälter in den Behälterstapelraum angeordnet ist, befindet sich dieses in einer untersten Position des Behälterstapelraums. Befindet sich ein wenigstens ein Behälter im Behälterstapelraum, so ist dieser Behälter stets benachbart zum Beschickungsraum angeordnet. Dadurch können vertikale Leerfahrten der Beschickungseinrichtung vermieden werden.

Vorzugsweise ist die Einlager- und/oder Auslagerstation an einer Tür des Fahrzeuges und/oder anstelle eines Beifahrerplatzes angeordnet. Der Beifahrerplatz ist ein Sitzplatz in der Fahrerkabine benachbart zum Sitzplatz des Fahrers. Hier kann ein Mitfahrer des Zustellfahrzeugs sich benachbart zum Fahrer des Zustellfahrzeugs hinsetzen und anschnallen. So ist der Beifahrersitz in Ländern mit Rechtsverkehr in Fahrtrichtung rechts neben dem Fahrersitz vorgesehen. In Ländern mit Linksverkehr ist der Beifahrersitz in Fahrtrichtung links neben dem Fahrersitz vorgesehen. Wenn der Beifahrerplatz durch die Einlager- und/oder Auslagerstation ersetzt wird, entfällt ein Gang des Fahrers in den Transportraum zur Aufnahme bzw. Ablage eines Transportgutes.

Neben einer Anordnung der Einlager- und/oder Auslagerstation in der Fahrerkabine kann die Einlager- und/oder Auslagerstation an einer Tür des Fahrzeuges vorgesehen werden. Dies ermöglicht einen Zugriff auf einen Behälter, der in der Einlager- und/oder Auslagerstation angeordnet ist, ohne dass der Fahrer sich in den Transportraum begeben muss. Der Fahrer kann die jeweilige Tür öffnen, das Transportgut aus einem in der Einlager- und/oder Auslagerstation befindlichen Behälter entnehmen, die Tür schließen und das Transportgut ausliefern. Da ein Suchen des Transportgutes in dem Transportraum entfällt wird die Effizienz erhöht.

Vorzugsweise weist das Fahrzeug wenigstens ein manuelles Lagerplatzsystem auf. Ein manuelles Lagerplatzsystem beschreibt ein System, bei dem Lagergut oder Transportgut händisch eingelagert und ausgelagert wird, wie es beispielsweise bei Regalen vorgesehen ist. Neben Regalen kann das manuelle Lagerplatzsystem auch Vorrichtungen für die Aufnahme von Sperrgut aufweisen. So können Regalböden beispielsweise klappbar angeordnet sein, sodass diese für einen passenden Zweck in eine jeweilige Position überführt werden können. Für die Aufnahme von Sperrgut können die Regalböden beispielsweise weggeklappt werden. Sperrgut ist Transportgut, dass ungewöhnlich viel Platz einnimmt und/oder während einer Beförderung sorgsam behandelt werden muss. Diese Anordnung ermöglicht die Beförderung von unterschiedlichen Transportgütern.

Vorzugsweise ist die Beschickungseinrichtung zwangsgeführt. Eine Zwangsführung der Beschickungseinrichtung ermöglicht es die Beschickungseinrichtung gezielt zu verfahren, ohne dass die Gefahr einer Entgleisung, wie es bei schienengeführten Beschickungseinrichtungen vorliegen könnte, besteht.

Die Beschickungseinrichtung ist auf wenigstens einer Verfahrachse angeordnet. Die Verfahrachse ermöglicht es die Beschickungseinrichtung zu bewegen und dabei definierte Toleranzen einzuhalten. Weiterhin verhindert eine Verfahrachse eine ungewollte Bewegung der Beschickungseinrichtung. So bleibt bei einer Bremsung, Beschleunigungen oder Seitenkräften die Beschickungseinrichtung in einer definierten Position bzw. kann definierte Bewegungen vollziehen.

Wenigstens zwei Verfahrachsen sind übereinander angeordnet, wobei die zwei Verfahrachsen winklig zueinander ausgerichtet sind. Dabei kann ein Winkel zwischen zwei Verfahrachsen der rechte Winkel sein, sodass eine erste Verfahrachse beispielsweise eine x-Achse und eine zweite Verfahrachse beispielsweise eine y-Achse darstellt. Diese Anordnung ermöglicht es der Beschickungseinrichtung jeden Ort des Blocklagers zu erreichen.

Vorzugsweise weist die Beschickungseinrichtung wenigstens eine Riemenanordnung auf mit wenigstens einer an der Hubeinheit angeordnete Umlenkvorrichtung, die in Schwerkraftrichtung unterhalb einer Unterseite der Hubvorrichtung vorgesehen ist. Durch die Hubvorrichtung kann ein Behälter aus einem Behälterstapelraum entnommen bzw. in diesen eingelagert werden. Dazu ist die Hubvorrichtung in Schwerkraftrichtung verfahrbar. Eine Verfahrbewegung der Hubvorrichtung wird durch die Riemenanordnung durchgeführt, wobei ein Riemen über wenigstens eine Umlenkrolle geführt wird. Die Hubvorrichtung ist mit einem Führungsmechanismus, beispielsweise einer Scherenführung oder dergleichen, mit der Beschickungseinrichtung verbunden. Der Führungsmechanismus ist dabei teilweise an der Unterseite der Hubvorrichtung angeordnet. Unterhalb der Unterseite ist eine erste Umlenkrolle vorgesehen, die Teil der Riemenanordnung ist. Eine zweite Umlenkung ist an der Beschickungseinrichtung angeordnet. Wird die Hubvorrichtung ausgefahren, bewegen sich die erste Umlenkrolle und die zweite Umlenkrolle relativ zueinander. Durch diese Anordnung kann die Hubvorrichtung einen größeren vertikalen Weg zurücklegen, als wenn die erste Umlenkrolle in Schwerkraftrichtung oberhalb der Unterseite der Hubvorrichtung angeordnet ist.

Vorzugsweise ist mindestens ein Behälter in dem Behälterstapelraum angeordnet wobei mindestens eine Seitenwand des Behälters mindestens teilweise beweglich ist. Eine mindestens teilweise bewegliche Seitenwand eines Behälters ermöglicht ein Öffnen dieser Seitenwand, wodurch ein Zugriff auf einen Innenraum des Behälters möglich ist. Dadurch kann auf einen Inhalt eines Behälters zugegriffen werden, der in einem Behälterstapelraum angeordnet ist. Ein Ein- oder Auslagern des Behälterskann entfallen. Dazu kann das Blocklager Zugriffsmöglichkeiten auf wenigstens einen Behälterstapelraum aufweisen. Diese Zugriffsmöglichkeiten kann beispielsweise durch eine Öffnung, eine Türanordnung oder dergleichen realisiert werden. Alternativ kann das Blocklager die Zugriffsmöglichkeit durch eine Rahmenkonstruktion des Blocklagers ermöglichen.

Vorzugsweise weist das Blocklager wenigstens eine Aussparung an wenigstens einer Außenseite auf. Durch diese Aussparungen kann in Kombination mit den Behältern mit der teilweise beweglichen Seitenwand auf das Innere des Behälters zugegriffen werden. Ein Auslagern zum Zugriff auf das Innere des Behälters kann wegfallen.

Weiterhin wird die Aufgabe durch ein Verfahren mit den Merkmalen des Anspruchs 11 gelöst.

Das Blocklager, das im Transportraum eines Zustellfahrzeugs ist angeordnet ist weist wenigstens einen Behälterstapelraum zur Aufnahme eines Behälterstapels auf, einem Beschickungsraum, wenigstens eine Einlager-und/oder Auslagerstation, wobei im Beschickungsraum wenigstens eine bewegbare Beschickungseinrichtung mit einer Hubeinheit zum vertikalen Einlagern und Auslagern von Behältern in und aus einem Behälterstapelraum vorgesehen ist, wobei Behälter umgelagert werden, während das Fahrzeug fährt oder steht.

Durch dieses Verfahren können Behälter umgestapelt bzw. umgelagert werden, sodass eine Zeitspanne, in der Behälter bewegt werden können, vergrößert wird. Dadurch kann ein Warten auf einen passenden Behälter entfallen, da die Behälter während einer Bewegung und während eines Stillstandes des Zustellfahrzeuges sortiert werden können.

Vorzugsweise wird wenigstens ein Behälter entsprechend einer definierten Destination zur Einlager- und/oder Auslagerstation überführt und/oder von der Einlager- und/oder Auslagerstation in einen Behälterstapelraum überführt. Dies ermöglicht dem Fahrer, dass er bei Ankunft an der definierten Destination auf einen entsprechenden Behälter zugreifen und aus diesem das auszuliefernde Transportgut entnehmen bzw. in den Behälter Transportgut einlagern kann.

Vorzugsweise wird ein Behälter durch Aufforderung eines Fahrers des Fahrzeuges zur Einlager- und/oder Auslagerstation überführt. Dadurch kann der Fahrer die zu fahrende Route eigenständig bestimmen und bei unerwarteten Routenänderungen auf den jeweils passenden Behälter zugreifen. Auch kann durch Auffordern des Fahrers der Behälter aus der Einlager- und/oder Auslagerstation in das Blocklager bzw. einen Behälterstapelraum überführt werden.

Vorzugsweise wird ein Behälter anhand einer vorgewählten Route und/oder eines GPS Signals zur Einlager- und/oder Auslagerstation überführt. Der Fahrer kann also auf einen Behälter zugreifen, wenn auf diesen zugegriffen werden soll. Der Fahrer kann sich auf das aktuelle Verkehrsgeschehen konzentrieren, ohne sich Gedanken über das Suchen oder Verräumen des auszuliefernden Transportgutes machen zu müssen.

Die Erfindung wird im Folgenden anhand eines bevorzugten Ausführungsbeispiels in Verbindung mit der Zeichnung geschrieben. Hierin zeigen:
- Fig. 1: eine perspektivisch schematische Ansicht eines Zustellfahrzeuges von schräg vorne;
- Fig. 2: eine perspektivisch schematische Ansicht des Zustellfahrzeuges von schräg hinten;
- Fig. 3: eine Draufsicht auf das Zustellfahrzeug;
- Fig. 4: einen vertikalen Schnitt in Fahrtrichtung bzw. der Fahrzeugachse eines Transportraumes des Zustellfahrzeuges mit integriertem Blocklager;
- Fig. 5: eine Draufsicht auf ein Zustellfahrzeug mit einer ersten Gestaltung des Transportraumes;
- Fig. 6: eine Draufsicht auf ein Zustellfahrzeug mit einer zweiten Gestaltung des Transportraumes;
- Fig. 7: eine Draufsicht auf ein Zustellfahrzeug mit einer dritten Gestaltung des Transportraumes;
- Fig. 8: eine Draufsicht auf ein Zustellfahrzeug mit einer vierten Gestaltung des Transportraumes;
- Fig. 9: eine schematische Darstellung von Verfahrachsen und der Beschickungseinrichtung;
- Fig. 10: eine schematische Darstellung von Verfahrachsen und der Beschickungseinrichtung in einem Transportraum;
- Fig. 11: eine schematische Darstellung eines zweiten Ausführungsbeispiels von Verfahrachsen und der Beschickungseinrichtung;
- Fig. 12: eine schematische Darstellung von Verfahrachsen und der Beschickungseinrichtung in einem Transportraum mit Radkästen;
- Fig. 13: Beschickungseinrichtung mit einer Hubeinheit in einer unteren Position;
- Fig. 14: Beschickungseinrichtung mit einer Hubeinheit in einer oberen Position;
- Fig. 15: einen Behälterstapel;
- Fig. 16: ein Blocklager mit Aussparungen an seinen Außenseiten.

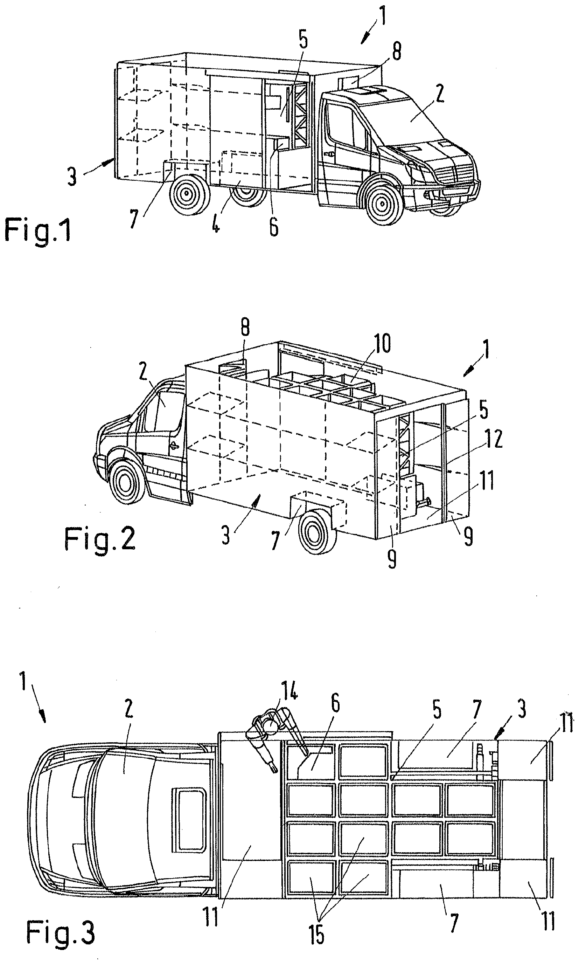

Fig. 1 zeigt perspektivisch ein Zustellfahrzeug 1 von schräg vorne mit einer Fahrerkabine 2 und einem Transportraum 3. Durch eine Tür 4 des Transportraumes 3 ist ein Blocklager 5 mit einer Einlager- und/oder Auslagerstation 6 zu erkennen. Der Transportraum 3 weist einen Radkasten 7 auf, der in einer Aussparung des Transportraumes 3 angeordnet ist. Eine bevorzugte Fahrtrichtung des Zustellfahrzeuges 1 ist in Richtung der Fahrerkabine 2. Zwischen der Fahrerkabine 2 und dem Transportraum 3 ist eine Durchgangstür 8 angeordnet, die eine Verbindung zwischen der Fahrerkabine 2 und dem Transportraum 3 herstellt.

Fig. 2 zeigt das Zustellfahrzeug 1 mit der Fahrerkabine 2 und dem Transportraum 3, in dem das Blocklager 5 angeordnet ist. An der Rückseite des Transportraumes 3 ist eine Hecktür 9 angeordnet. In dem Blocklager 5 sind Behälter 10 angeordnet. Weiterhin wird in Fig. 2 ein manuelles Lagersystem 11 im Heckbereich des Transportraumes 3 gezeigt. Das manuelle Lagersystem 11 weist im vorliegenden Ausführungsbeispiel Regale 12 auf.

In Fig. 3 ist eine Draufsicht auf das Zustellfahrzeug 1 dargestellt. In Fahrtrichtung vorne ist die Fahrerkabine 2 und dahinter der Transportraum 3 angeordnet. Neben dem Blocklager 5 mit Behälterstapeln 13 sind in dem Transportraum 3 mehrere manuelle Lagerplatzsysteme 11 angeordnet. Im Bereich der Tür 4 ist die Einlager- und/oder Auslagerstation 6 angeordnet, sodass ein Fahrer oder Paketzusteller 14 von außen mit der Einlager- und/oder Auslagerstation 6 zusammenwirken kann. Die Behälterstapel 13 sind in Behälterstapelräumen 15 angeordnet.

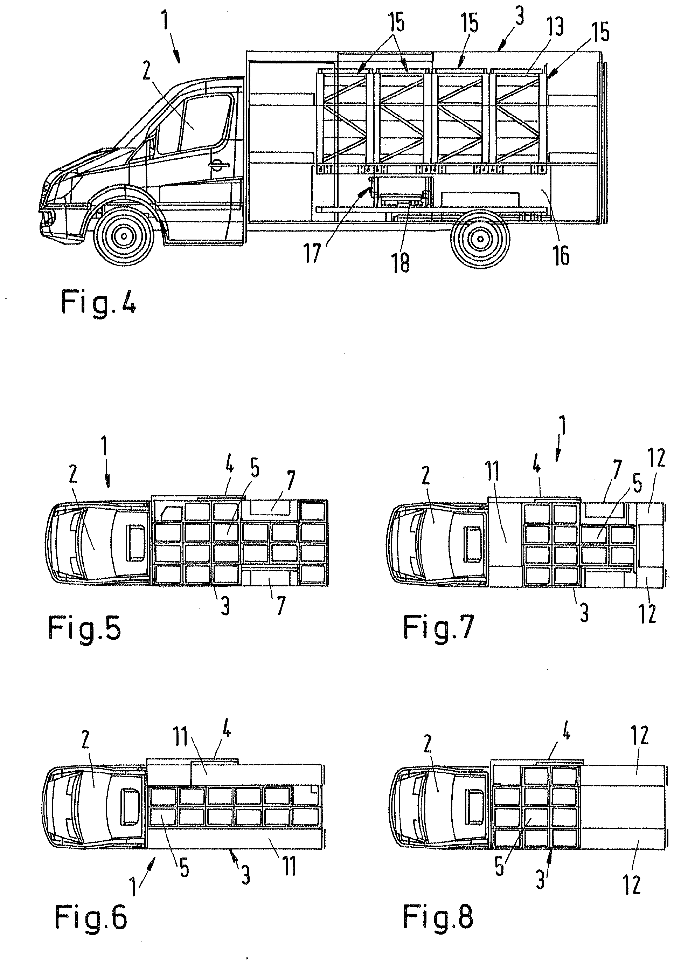

Fig. 4 zeigt das Zustellfahrzeug 1 mit der Fahrerkabine 2 und dem Transportraum 3. Das im Transportraum 3 befindliche Blocklager 5 weist mehrere Behälterstapelräume 15 und einem Beschickungsraum 16 auf. In dem Behälterstapelraum 15 können Behälterstapel 13 angeordnet sein. Der Beschickungsraum 16 ist in Schwerkraftrichtung unterhalb des Behälterstapelraum 15 angeordnet. Im Beschickungsraum 16 ist eine Beschickungseinrichtung 17 angeordnet, die durch Verfahrachsen 18 bewegt wird.

In den Fig. 5 bis 8 sind verschiedene Gestaltungsmöglichkeiten des Transportraumes 3 dargestellt. In Fig. 5 ist der Transportraumes 3 dargestellt, bei dem ein Großteil als Blocklageranordnung bzw. Blocklager 5 ausgeführt ist. Über dem Bereich der Radkästen 7 kann kein Blocklager angeordnet sein, da die Blocklageranordnung in diesem Bereich durch die Radkästen 7 behindert ist. Über den Radkästen 7 können manuelle Lagerplatzsysteme 11 vorgesehen sein. Die Einlager- und/oder Auslagerstation 6 ist in der Nähe der Fahrerkabine 2 im Transportraum angeordnet, sodass auf die Einlager- und/oder Auslagerstation 6 durch eine Tür 4, 8 zugegriffen werden kann.

In Fig. 6 ist das Blocklager 5 entlang der Fahrzeugachse angeordnet. Die äußeren Bereiche des Transportraumes 3 weisen manuelle Lagerplatzsysteme 11 auf. Die Einlager- und/oder Auslagerstation 6 ist im Bereich der Hecktür 9 angeordnet. Auch hier kann das manuelle Lagerplatzsystem 11 Regale 12 oder dergleichen aufweisen.

In Fig. 7 ist die Einlager- und/oder Auslagerstation 6 im Bereich der Tür 4 angeordnet zwischen Fahrerkabine 2 und Blocklager 5 ist ein manuelles Lagerplatzsystem 11 angeordnet. Zudem ist ein weiteres manuelles Lagerplatzsystem 11 im Bereich der Hecktür 9 und den Radhäusern 7 vorgesehen.

In Fig. 8 ist der Transportraum 3 in zwei Bereiche gegliedert. In einem ersten Bereich ist das Blocklager 5 angeordnet, dass direkt hinter der Fahrerkabine 2 angeordnet ist. In einem zweiten Bereich, dem Heck des Zustellfahrzeuges 1 ist ein manuelles Lagerplatzsystem 11 angeordnet, wobei Seitenwände des Transportraumes 3 in diesem zweiten Bereich Regale 12 aufweisen.

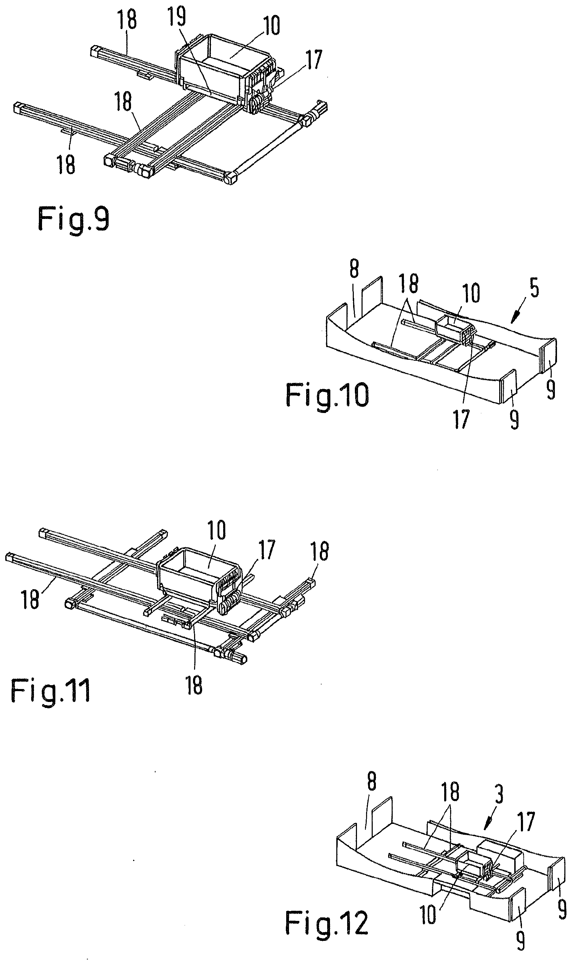

Fig. 9 zeigt eine schematische Darstellung der Beschickungseinrichtung 17, die auf Verfahrachsen 18 a, b angeordnet ist. Die Verfahrachsen 18 a, b sind dabei winklig, vorzugsweise rechtwinklig, zueinander angeordnet. Durch die Verfahrachsen 18 a, b kann die Beschickungseinrichtung 17 im Bereich der Verfahrachsen 18 a, b an jedem Ort positioniert werden. So kann die Beschickungseinrichtung 17 in Fahrtrichtung, quer zur Fahrtrichtung oder diagonal bewegt werden. In der Beschickungseinrichtung 17 ist im vorliegenden Anwendungsbeispiel ein Behälter 10 in einer Hubeinheit 19 angeordnet.

Fig. 10 zeigt die in Fig. 9 beschriebene Beschickungseinrichtung 17 und Verfahrachsen 18a, b in einem unteren Abschnitt des Transportraumes 3, dem Beschickungsraum 16.

In Fig. 11 sind Verfahrachsen 18 a, b, c und die Beschickungseinrichtung 17 dargestellt. Hierbei sind drei Verfahrachsen 18 a, b, c dargestellt, wobei zwei der Verfahrachsen 18 a, c parallel zueinander ausgerichtet sind. Winklige Ausrichtungen der Verfahrachsen 18 a, b, c sind ebenfalls möglich. Die untersten der Verfahrachsen 18a ist quer zur Fahrtrichtung, die mittlere der Verfahrachsen 18b ist in Fahrtrichtung und die oberste der Verfahrachsen 18c ist quer zur Fahrtrichtung angeordnet. Durch diese Anordnung kann eine Art Teleskopbewegung realisiert werden, sodass die in Fig. 12 dargestellten Radhäuser 7 umfahren werden können. Dadurch können Behälterstapelräume 15, die an den Seitenwänden des Transportraumes 3 vor oder hinter den Radhäusern 7 angeordnet sind, erreicht werden.

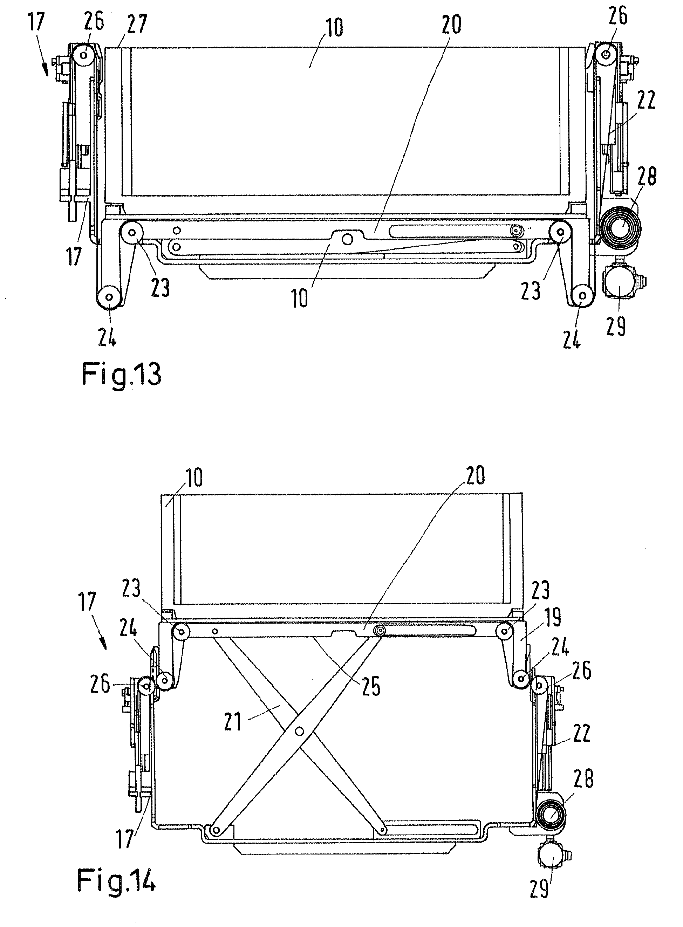

Figs. 13 und 14 zeigen die Beschickungseinrichtung 17 und die Hubeinheit 19 in einem Schnitt. Dabei zeigt Fig. 13 die Hubeinheit 19 in einer unteren Stellung und Fig. 14 die Hubeinheit 19 in einer oberen Stellung. Weiterhin ist auf der Hubeinheit 19 ein Behälter 10 angeordnet. Die Hubeinheit 19 weist eine Grundplatte 20 auf, an der eine Scherenführung 21 angeordnet ist. Die Hubeinheit 19 wird durch einen Riemen 22 bewegt. Dazu weist die Hubeinheit erste Umlenkrollen 23 und zweite Umlenkrollen 24 auf, wobei die zweite Umlenkrolle 24 unterhalb einer Unterseite 25 der Hubeinheit angeordnet ist. Die Beschickungseinrichtung 17 weist dritte Umlenkrollen 26 auf, die in der unteren Stellung im Bereich einer oberen Kante 27 des Behälters 10 angeordnet sind. Die Führung des Riemens 22 ist im vorliegenden Ausführungsbeispiel im Wesentlichen symmetrisch. So wird der Riemen von links nach rechts betrachtet zuerst über eine dritte Umlenkrolle 26 anschließend über eine zweite Umlenkrolle 24 und schließlich über eine erste Umlenkrolle 23 geführt. Auf der anderen Seite wird der Riemen 22 über die gleichen Umlenkrollen 23, 24, 26 in entgegengesetzter Reihenfolge geführt, wobei das Ende des Riemens 22 mit einer Welle 28 verbunden ist. Das Ende des Riemens 22 wird auf der Welle 28 aufgewickelt, wobei die Welle 28 mit einem Motor 29 verbunden ist, der die Antriebsfunktion des Riemens übernimmt.

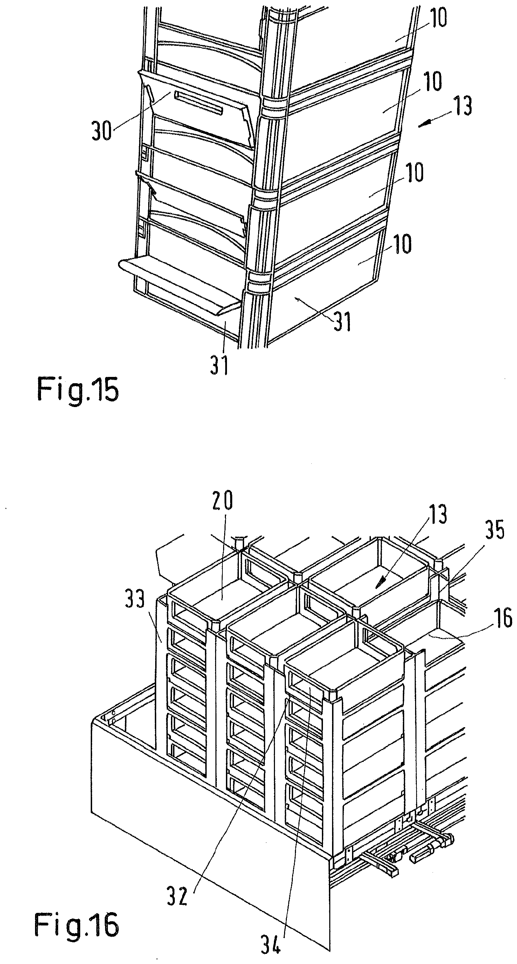

Fig. 15 zeigt einen Behälterstapel 13, bei dem mehrere Behälter 10 in vertikaler Richtung gestapelt sind. Die Behälter 10 weisen einen beweglichen Teil 30 auf. Der bewegliche Teil 30 ist an einer der Seitenwände 31, hier einer Stirnseite, des Behälters 10 angeordnet. Im vorliegenden Ausführungsbeispiel bildet der bewegliche Teil 30 einen oberen Teil der Seitenwand 31.

Der bewegliche Teil 30 ist klappbar vorgesehen und kann von einer geschlossenen Stellung, in der der bewegliche Teil 30 die Seitenwand komplettiert, in eine offene Position überführt werden, bei der ein Zugriff auf ein Inneres des Behälters 10 möglich ist. Das klappbare Teil 30 kann dabei in die offene Position überführt werden, während der Behälter 10 in einem Behälterstapel 13 angeordnet ist. Ebenfalls ist es möglich das bewegliche Teil 30 von der offenen Position in die geschlossene Position zu überführen während der Behälter 10 in einem Behälterstapel 13 angeordnet ist. Eine Überführung von einer der Positionen in die jeweils andere Position ist auch bei einem alleinstehenden Behälter 10 möglich. Sowohl in der geschlossenen als auch in der offenen Position kann der Behälter 10 transportiert und/oder bewegt werden.

Fig. 16 stellt ein Blocklager 5 mit Behälterstapelräumen 15 dar, in denen Behälterstapel 13 angeordnet sind. Das Blocklager 5 weist Aussparungen 32 auf, die es ermöglichen auf ein Inneres eines Behälters 10 zuzugreifen. Die Aussparungen 32 sind an Außenseiten 33 des Blocklager 5 im Bereich der Behälterstapelräume 15 angeordnet. Dabei sind die Behälter 10 als Sichtkästen ausgeführt. Die Sichtkästen weisen eine Durchgriffsöffnung 34 auf. Genauer ist die Durchgriffsöffnung 34 an einer Seitenwand 31 des Behälters 10 vorgesehen. Im vorliegenden Ausführungsbeispiel sind zwei Durchgriffsöffnungen 34 an den Stirnseiten des Behälters 10 vorgesehen.

Weiterhin sind in Fig. 16 Führungen 35 zum Führen von Behältern 10 in Behälterstapelräumen 16 dargestellt. Jeweils vier Führungen 35 führen die Behälterstapel 13 vertikal.

Im Folgenden wird die Funktionsweise eines Blocklager 5 beschrieben. Ausgehend von einer Einlager- und/oder Auslagerstation 6 können Behälter 10 in das Blocklager 5 eingelagert und ausgelagert werden. Zum Einlagern wird der Behälter 10 von der Beschickungseinrichtung 17 aus der Einlager- und/oder Auslagerstation 6 aufgenommen und in den Beschickungsraum 16 überführt.

Die Beschickungseinrichtung 17 verfährt den Behälter 10 zu einem definierten Behälterstapelraum 15 und hebt den Behälter 10 durch die Hubeinheit 19 in den Behälterstapelraum 15. Dabei wird ein nicht dargestellter Haltemechanismus von einer Halteposition in eine Freigabeposition überführt.

Wenn schon ein Behälter 10 oder ein Behälterstapel 13 in den Behälterstapelraum 15 angeordnet ist, wird der Behälter 10 oder auch der Behälterstapel 13 mit angehoben. Das Gewicht des Behälterstapels lastet nun auf der Beschickungseinrichtung 17 bzw. der Hubeinheit 19. Sobald der neu einzuführende Behälter 10 über eine definierte Schwelle, Höhe oder dergleichen gehoben wurde wird der Haltemechanismus von der Freigabeposition in die Halteposition überführt. Die Hubeinheit 19 wird abgesenkt und die Beschickungseinrichtung 17 kann im Beschickungsraum 16 frei verfahren werden.

Die Beschickungseinrichtung 17 kann nun verfahren werden, um einen anderen Behälter 10 von einem Behälterstapelraum 16 in einen anderen Behälterstapelraum 16 oder einen Behälter 10 von der Einlager- und/oder Auslagerstation 6 in einen Behälterstapelraum 15 oder einen Behälter 10 von einem Behälterstapelraum 16 zur Einlager- und/oder Auslagerstation 6 zu überführen.

Um einen Behälter 10 auszulagern wird dieser von einem Behälterstapelraum 15 zur Einlager- und/oder Auslagerstation 6 überführt. Dazu fährt die Beschickungseinrichtung 17 unter den Behälterstapel 13, in dem der zu entnehmende Behälter 10 angeordnet ist. Wenn der zu entnehmende Behälter 10 der unterste Behälter des Behälterstapels 10 ist, kann der Behälter 10 direkt zur Einlager- und/oder Auslagerstation 6 überführt werden. Ist in der zu entnehmende Behälter 10 oberhalb des untersten Behälters 10 des Behälterstapels 13 angeordnet, so müssen die unterhalb des zu entnehmender Behälters 10 angeordneten Behälter 10 in einen anderen Behälterstapelraum 16 überführt werden.

Um einen untersten Behälter 10 aus einem Behälterstapelraum 15 zu entnehmen wird der Behälterstapel 13, der im Behälterstapel 13 angeordnet ist, von der Beschickungseinrichtung 17 in Verbindung mit der Hubeinheit 19 angehoben, sodass der Haltemechanismus in die Freigabeposition überführt werden kann. Anschließend wird der Behälterstapel 13 bis zu einer definierten Höhe oder Position abgesenkt, bei der der Haltemechanismus von der Freigabeposition in die Halteposition überführt wird. Der Haltemechanismus hält nun den oberhalb des zu entnehmenden Behälters 10 angeordneten Behälterstapel 13. Nun kann der Behälter 10 weiter abgelassen und in einen weiteren Behälterstapelraum 16 oder zur Einlager- und/oder Auslagerstation überführt werden.

Die Beschickungseinrichtung 17 ist zwangsgeführt. Da sich das Zustellfahrzeug bewegt und Schlaglöcher, unrunde Reifen oder andere Unannehmlichkeiten zu Vibrationen, Schlägen oder allgemein Störungen führen, verhindert die Zwangsführung ein Entgleisen oder Verkannten der Beschickungseinrichtung 17. Die Beschickungseinrichtung 17 ist dazu auf den Verfahrachsen 18 a, b, c angeordnet, wobei mehrere Verfahrachsen 18 a, b, c zusammenwirken können. Dazu ist beispielsweise eine erste Verfahrachse 18a in Fahrtrichtung angeordnet und ein zweite Verfahrachse 18b auf der ersten Verfahrachse 18a quer zur Fahrtrichtung angeordnet. Dadurch kann jeder Punkt des Beschickungsraum 16 erreicht werden. Alternativ können die Verfahrachsen 18 in einem größeren oder kleineren Winkel als dem Rechtenwinkel, zueinander angeordnet sein.

Da einige Zustellfahrzeuge 1 in dem Transportraum 3 angeordnete Radhäuser 7 aufweisen, kann die Beschickungseinrichtung 17 auf mehreren Verfahrachsen 18 angeordnet sein. Hierbei ist die erste Verfahrachse 18 quer zur Fahrtrichtung und die zweite Verfahrachse 18 ist auf der ersten Verfahrachse 18 in Fahrtrichtung angeordnet. Auf der zweiten Verfahrachse 18 ist weiterhin eine dritte Verfahrachse 18 angeordnet. Dies ermöglicht eine Art Teleskopbewegung der Beschickungseinrichtung 17 quer zur Fahrtrichtung.

Um zwischen den Radhäusern 7 zu verfahren wird die Beschickungseinrichtung 17, die erste Verfahrachse 18 und die dritte Verfahrachse 18 in eine mittlere Position überführt, die im Bereich der Fahrzeugachse des Zustellfahrzeuges des 1 liegt. Sobald die Radhäuser 7 passiert wurden, können die Verfahrachsen 18 frei bewegt werden.

Die Hubeinheit 19 wird durch eine Riemenanordnung in vertikaler Richtung, der Schwerkraftrichtung, bewegt. Dazu weist die Hubeinheit mehrere Umlenkrollen 23, 24 auf, wobei die zweite Umlenkrolle 24 unterhalb der Grundlpatte 20 der Hubeinheit 19 angeordnet ist. Die zweite Umlenkrolle 24 ist in einer abgelassenen Position benachbart zur obersten Verfahrachse 18 b, c, genauer auf Höhe der jeweils obersten Verfahrachse 18b, c, angeordnet. Dies ermöglicht es, dass die Hubeinheit 19 eine große vertikale Reichweite aufweist. In der ausgefahrenen Position ist die zweite Umlenkrolle 24 im Bereich der dritten Umlenkrolle 26 angeordnet.

Das Blocklager weist an seinen zugänglichen Außenseite 33 Aussparungen 32 auf. Durch diese Aussparungen 32 in Kombination mit Durchgriffsöffnungen 34 an den Behältern 10 kann Transportgut aus den Behältern 10 entnommen und in diese hineingelegt werden. Alternativ zu den Durchgrifföffnungen 34 können die Behälter 10 einen beweglichen Teil 29 an einer Seitenwand 30 aufweisen. Dieser bewegliche Teil 29 kann ebenfalls durch die Aussparungen 32 in eine geöffnete oder eine geschlossene Position überführt werden, sodass eine Durchgriffsöffnung 34 zumindest zeitweise entsteht.

Eine solche Anordnung ermöglicht, dass auf den Inhalt von Behältern 10 zugegriffen werden kann, die im Blocklager 5 angeordnet sind, ohne dass diese ausgelagert werden müssen.

Das Blocklager 5 ist im Wesentlichen an Seitenwänden des Transportraumes 3 und/oder durch eine Abstützung eines nicht dargestellten Rahmens im Transprotraum 3 positioniert, wobei der Rahmen in Fahrtrichtung vor und/oder hinter dem Blocklager 5 und/oder dem Beschickungsraum 16 angeordnet ist., sodass im Bereich des Beschickungsraumes 16 das Blocklager 5 nicht abgestützt werden muss. Halterungen und Rahmen der Behälterstapelräume 15 sind auf einen Bereich oberhalb des Beschickungsraumes 16 begrenzt.

Im Folgenden wird nun ein typischer Tagesablauf des Fahrers 14 und seinem Zustellfahrzeug 1 beschrieben. Zu Schichtbeginn belädt der Fahrer 14 das Zustellfahrzeug 1 mit den auszuliefernden Transportgütern. Die Transportgüter können dabei in Behältern 10 angeordnet sein oder lose beispielsweise als Sperrgut verladen werden. Die Behälter 10 werden in das Blocklager 5 eingelagert, wo die Behälter 10 über die Einlager- und/oder Auslagerstation 6 in die Behälterstapelräume 15 überführt werden. Das lose Transportgut wird in dem manuellen Lagerplatzsystem 11 angeordnet.

Zum ergonomischen Beladen des Blocklagers 5 ist die Einlager- und/oder Auslagerstation 6 im Bereich einer der Türen 4, 8, 9 angeordnet. Der Fahrer 14 kann von außerhalb des Zustellfahrzeug 1 die Behälter 10 in der Einlager- und/oder Auslagerstation anordnen. Die Behälter 10 werden anschließend in die Behälterstapelräume 15 überführt. Dort können die Behälter 10 einen vertikal gestapelten Behälterstapel 13 bilden.

Weiterhin kann das Blocklager 5 zwei oder mehr Einlager- und/oder Auslagerstationen 6 aufweisen. So können beispielsweise an jeder Tür 4, 8, 9 oder in der Fahrerkabine 2 wenigstens eine Einlager- und/oder Auslagerstation 6 vorgesehen sein. Insbesondere können im Bereich der Hecktür 9 wenigstens zwei Einlager- und/oder Auslagerstationen 6 angeordnet sein.

Das manuelle Lagerplatzsystem 11 kann Regale 12 mit hochklappbaren Regalböden aufweisen. Die Regalböden können bei Nichtbenutzung in eine Nichtbenutzungsposition überführt werden, die sich von einer Benutzungsposition unterscheidet. In der Benutzungsposition kann auf dem Regalboden Transportgut angeordnet werden. In der Nichtbenutzungsposition sind die Regalböden platzsparend hochgeklappt oder anderweitig verstaut.

Sobald das Zustellfahrzeug 1 zu einer vorgegebenen Adresse bzw. Destination unterwegs ist kann das Blocklager 5 Behälter 10 umlagern. Zum Ausliefern des Transportgutes bzw. der Pakete fährt der Fahrer 14 mit dem Zustellfahrzeug 1 zu der vorgegebenen Adresse bzw. Destination. Auf dem Weg zu dieser Adresse überführt das Blocklager 5 den dazugehörigen Behälter 10 zur Einlager- und/oder Auslagerstation 6.

Sobald die vorgegebene Adresse erreicht ist kann der Fahrer 14 das Transportgut aus dem Behälter 10 entnehmen und an einen Empfänger übergeben. Ein Suchen des zur Adresse passenden Transportgutes entfällt.

Das Blocklager 5 kann auch einen Behälter 10 auf Anforderung des Fahrers 14 zur Einlager- und/oder Auslagerstation 6 überführen. Dies ist beispielsweise hilfreich, wenn der Fahrer unterwegs zufällig einen Empfänger eines auszuliefernden Transportgutes trifft.

Kann der Fahrer 14 während eines Auslieferungsvorgangs das Transportgut nicht an einen Empfänger übergeben, so kann das Transportgut zurück in den Behälter 10 überführt werden. Der Behälter 10 wird dann automatisch zurück in das Blocklager 5 überführt, ohne dass sich der Fahrer 14 weiter um das Transportgut kümmern muss.

Weiterhin kann ein Behälter 10 anhand einer vorgewählten Route zur Einlager- und/oder Auslagerstation 6 überführt werden. Entsprechend können die Behälter 10 im Blocklager vor sortiert werden, sodass eine schnelle Auslieferung möglich ist.

Ebenfalls können Behälter 10 anhand eines GPS-Signals zur Einlager- und/oder Auslagerstation 6 überführt werden. Nähert sich das Zustellfahrzeug 1 einer definierten Adresse an so wird ein mit dieser Adresse verbundener Behälter 10 zur Einlager- und/oder Auslagerstation 6 überführt. Dies ist hilfreich, wenn von einer vorgegebenen Route abgewichen werden muss, wie es zum Beispiel bei unvorhergesehenen Baustellen, Unfällen oder dergleichen der Fall sein könnte.

Wurden schließlich alle Adressen und/oder Destinationen angefahren begibt sich der Fahrer 14 samt Zustellfahrzeug 1 zurück zu seinem Startpunkt und entlädt die Behälter 10 aus dem Blocklager 5 in der umgekehrten Art und Weise, wie es beladen wurde.

Das Entladen oder das Auslagern von Transportgut aus dem Zustellfahrzeug 1 oder dem Blocklager 5 kann analog zum Beladen oder Einlagern von Transportguts in das Zustellfahrzeug 1 oder das Blocklager 5 erfolgen. Beim Einlagern transportiert die Beschickungseinrichtung 17 das in einem Behälter 10 angeordnete Transportgut von der Einlager- und/oder Auslagerstation 6 in einen Behälterstapelraum 15 des Blocklagers 5. Beim Auslagern transportiert die Beschickungseinrichtung 17 das in einem Behälter 10 angeordnete Transportgut von einem Behälterstapelraum 15 des Blocklagers 5 zur Einlager- und/oder Auslagerstation 6.

### Bezugszeichenliste

- 1: Zustellfahrzeug
- 2: Fahrerkabine
- 3: Transportraum
- 4: Tür
- 5: Blocklager
- 6: Einlager- und/oder Auslagerstation
- 7: Radkasten
- 8: Durchgangstür
- 9: Hecktür
- 10: Behälter
- 11: manuelles Lagerplatzsystem
- 12: Regal
- 13: Behälterstapel
- 14: Fahrer
- 15: Behälterstapelraum
- 16: Beschickungsraum
- 17: Beschickungseinrichtung
- 18a: Verfahrachse
- 18b: Verfahrachse
- 18c: Verfahrachse
- 19: Hubeinheit
- 20: Grundplatte
- 21: Scherenführung
- 22: Riemen
- 23: erste Umlenkrolle
- 24: zweite Umlenkrolle
- 25: Unterseite
- 26: dritte Umlenkrolle
- 27: obere Kante
- 28: Welle
- 29: Motor
- 30: beweglicher Teil
- 31: Seitenwand
- 32: Aussparung
- 33: Außenseite
- 34: Durchgriffsöffnung
- 35: Führung

## Patentansprüche

1. Zustellfahrzeug (1) mit wenigstens einem Transportraum (3), zur Aufnahme von wenigstens einem Behälter (10), und einer Beschickungseinrichtung (17), wobei im Transportraum (3) ein Blocklager (5) mit wenigstens einem Behälterstapelraum (15) zur Aufnahme eines Behälterstapels (13), einem Beschickungsraum (16) und wenigstens einer Einlager- und/oder Auslagerstation (6) vorgesehen ist, wobei im Beschickungsraum (16) wenigstens eine bewegbare Beschickungseinrichtung (17) mit einer Hubeinheit (19) zum vertikalen Einlagern und Auslagern von Behältern (10) in und aus dem mindestens einen Behälterstapelraum (15) angeordnet ist, **dadurch gekennzeichnet, dass** die Beschickungseinrichtung (17) auf wenigstens zwei übereinander angeordneteten Verfahrachsen (18) angeordnet ist, wobei die zwei Verfahrachsen (18) winklig zueinander sind.

2. Zustellfahrzeug (1) nach Anspruch 1 **dadurch gekennzeichnet, dass** der Beschickungsraum (16) in Schwerkraftrichtung unter dem Behälterstapelraum (15) angeordnet ist.

3. Zustellfahrzeug (1) nach Anspruch 1 oder 2 **dadurch gekennzeichnet, dass** die Einlager- und/oder Auslagerstation (6) an einer Tür des Zustellfahrzeuges (4, 8, 9) und/oder anstelle eines Beifahrerplatzes angeordnet ist.

4. Zustellfahrzeug (1) nach einem der Ansprüche 1 bis 3 **dadurch gekennzeichnet, dass** das Zustellfahrzeug (1) wenigstens ein manuelles Lagerplatzsystem (11) aufweist.

5. Zustellfahrzeug (1) nach einem der Ansprüche 1 bis 4 **dadurch gekennzeichnet, dass** die Beschickungseinrichtung (17) zwangsgeführt ist.

6. Zustellfahrzeug (1) nach einem der Ansprüche 1 bis 5 **dadurch gekennzeichnet, dass** die Beschickungseinrichtung (17) wenigstens eine Riemenanordnung aufweist mit wenigstens einer an der Hubeinheit (19) angeordnete Umlenkvorrichtung, die in Schwerkraftrichtung unterhalb einer Unterseite (25) der Hubeinheit (19) vorgesehen ist.

7. Zustellfahrzeug nach einem der Ansprüche 1 bis 6 **dadurch gekennzeichnet, dass** mindestens ein Behälter (10) in dem Behälterstapelraum (15) angeordnet ist und mindestens eine Seitenwand (31) des Behälters (10) mindestens teilweise beweglich ist.

8. Zustellfahrzeug (1) nach einem der Ansprüche 1 bis 7 **dadurch gekennzeichnet, dass** das Blocklager (5) wenigstens eine Aussparung (32) an wenigstens einer Außenseite (33) aufweist.

9. Verfahren zum Einlagern und Auslagern von Behältern (10) in einem Zustellfahrzeug (1) **dadurch gekennzeichnet, dass** im Transportraum (3) ein Blocklager (5) mit wenigstens einem Behälterstapelraum (15) zur Aufnahme eines Behälterstapels (13), einem Beschickungsraum (16) und wenigstens einer Einlager- und/oder Auslagerstation (6) vorgesehen ist, wobei im Beschickungsraum (16) wenigstens eine bewegbare Beschickungseinrichtung (17) mit einer Hubeinheit (19) zum vertikalen Einlagern und Auslagern von Behältern (10) in und aus einem Behälterstapelraum (15) angeordnet ist, wobei Behälter (10) umgelagert werden, während das Zustellfahrzeug (1) fährt oder steht, wobei die Beschickungseinrichtung (17) auf wenigstens zwei übereinander angeordneteten Verfahrachsen (18) angeordnet ist, wobei die zwei Verfahrachsen (18) winklig zueinander sind.

10. Verfahren nach Anspruch 9, **dadurch gekennzeichnet, dass** wenigstens ein Behälter (10) entsprechend einer definierten Destination zur Einlager- und/oder Auslagerstation (6) überführt wird und/oder von der Einlager- und/oder Auslagerstation (6) in einen Behälterstapelraum (15) überführt wird.

11. Verfahren nach Anspruch 9, **dadurch gekennzeichnet, dass** ein Behälter (10) durch Anforderung eines Fahrers (14) des Zustellfahrzeuges (1) zur Einlager- und/oder Auslagerstation (6) überführt wird.

12. Verfahren nach Anspruch 9 oder 10, **dadurch gekennzeichnet, dass** ein Behälter (10) anhand einer vorgewählten Route und/oder eines GPS-Signals zur Einlager- und/oder Auslagerstation (6) überführt wird.

## Claims

1. Delivery vehicle (1) having at least one transport space (3) for receiving at least one container (10), and a loading device (17), wherein a block store (5) having at least one container stacking space (15) for receiving a container stack (13), a loading space (16) and at least one storage and/or retrieval station (6) are provided in the transport space (3), at least one movable loading device (17) with a lifting unit (19) for vertically storing and discharging containers (10) into and out of the at least one container stacking space (15) being arranged in the loading space (16), **characterized in that** the loading device (17) is arranged on at least two travel axes (18) arranged one above the other, the two travel axes (18) being at an angle to one another.

2. Delivery vehicle (1) according to claim 1, **characterized in that** the loading space (16) is arranged below the container stack space (15) in the direction of gravity.

3. Delivery vehicle (1) according to claim 1 or 2, **characterized in that** the storage and/or retrieval station (6) is arranged on a door of the delivery vehicle (4, 8, 9) and/or instead of a passenger seat.

4. Delivery vehicle (1) according to one of claims 1 to 3, **characterized in that** the delivery vehicle (1) has at least one manual storage location system (11).

5. Delivery vehicle (1) according to one of the claims 1 to 4, **characterized in that** the loading device (17) is positively guided.

6. Delivery vehicle (1) according to one of the claims 1 to 5, **characterized in that** the loading device (17) has at least one belt arrangement with at least one deflection device which is arranged on the lifting unit (19) and is provided in the direction of gravity below an underside (25) of the lifting unit (19).

7. Delivery vehicle according to one of claims 1 to 6, **characterized in that** at least one container (10) is arranged in the container stacking space (15) and at least one side wall (31) of the container (10) is at least partially movable.

8. Delivery vehicle (1) according to one of claims 1 to 7, **characterized in that** the block storage (5) has at least one recess (32) on at least one outer side (33).

9. Method for storing and retrieving containers (10) in a delivery vehicle (1), **characterized in that** a block store (5) having at least one container stacking space (15) for receiving a container stack (13), a loading space (16) and at least one storage and/or retrieval station (6) are provided in the transport space (3), wherein at least one movable loading device (17) with a lifting unit (19) is arranged in the loading space (16) for vertically storing and removing containers (10) into and from a container stack space (15), wherein containers (10) are transferred while the delivery vehicle (1) is moving or stationary, wherein the loading device (17) is arranged on at least two travel axes (18) arranged one above the other, wherein the two travel axes (18) are at an angle to one another.

10. Method according to claim 9, **characterized in that** at least one container (10) is transferred to the storage and/or retrieval station (6) according to a defined destination and/or is transferred from the storage and/or retrieval station (6) into a container stacking space (15).

11. Method according to claim 9, **characterized in that** a container (10) is transferred to the storage and/or retrieval station (6) by request of a driver (14) of the delivery vehicle (1).

12. Method according to claim 9 or 10, **characterized in that** a container (10) is transferred to the storage and/or retrieval station (6) on the basis of a preselected route and/or a GPS signal.

## Revendications

1. Véhicule de livraison (1) avec au moins un espace de transport (3) pour recevoir au moins un conteneur (10), et un dispositif de remplissage (17), sachant que dans l'espace de transport (3) sont prévus un élément de stockage en bloc (5) avec au moins un espace d'empilage de conteneurs (15) pour recevoir une pile de conteneurs (13), un espace de remplissage (16) et au moins un poste de stockage et/ou de déstockage (6), sachant que dans l'espace de remplissage (16) est disposé au moins un dispositif de remplissage (17) mobile avec une unité de levage (19) pour le stockage et le déstockage vertical de conteneurs (10) dans et à partir d'au moins un espace d'empilage de conteneurs (15), **caractérisé en ce que** le dispositif de remplissage (17) est disposé sur au moins deux axes de déplacement (18) disposés l'un sur l'autre, sachant que les deux axes de déplacement (18) sont placés angulairement l'un par rapport à l'autre.

2. Véhicule de livraison (1) selon la revendication 1, **caractérisé en ce que** l'espace de remplissage (16) est disposé dans la direction de gravité sous l'espace d'empilage de conteneurs (15).

3. Véhicule de livraison (1) selon la revendication 1 ou 2, **caractérisé en ce que** le poste de stockage et/ou de déstockage (6) est disposé sur une porte du véhicule de livraison (4, 8, 9) et/ou à la place d'une place de passager avant.

4. Véhicule de livraison (1) selon l'une quelconque des revendications 1 à 3, **caractérisé en ce que** le véhicule de livraison (1) comporte au moins un système d'entreposage (11) manuel.

5. Véhicule de livraison (1) selon l'une quelconque des revendications 1 à 4, **caractérisé en ce que** le dispositif de remplissage (17) est guidé par force.

6. Véhicule de livraison (1) selon l'une quelconque des revendications 1 à 5, **caractérisé en ce que** le dispositif de remplissage (17) comporte au moins un système à courroie avec au moins un dispositif de renvoi disposé sur l'unité de levage (19), qui est prévu en direction de la gravité en dessous d'une face inférieure (25) de l'unité de levage (19).

7. Véhicule de livraison selon l'une quelconque des revendications 1 à 6, **caractérisé en ce qu'**au moins un conteneur (10) est disposé dans l'espace d'empilage de conteneurs (15) et au moins une paroi latérale (31) du conteneur (10) est au moins en partie mobile.

8. Véhicule de livraison (1) selon l'une quelconque des revendications 1 à 7, **caractérisé en ce que** l'élément de stockage en bloc (5) comporte au moins un dégagement (32) sur au moins un côté extérieur (33).

9. Procédé de stockage et de déstockage de conteneurs (10) dans un véhicule de livraison (1), **caractérisé en ce que** dans l'espace de transport (3) sont prévus un élément de stockage en bloc (5) avec au moins un espace d'empilage de conteneurs (15) pour recevoir une pile de conteneurs (13), un espace de remplissage (16) et au moins un poste de stockage et/ou de déstockage (6), sachant que dans l'espace de remplissage (16) est au moins disposé un dispositif de remplissage mobile (17) avec une unité de levage (19) pour le stockage et le déstockage vertical de conteneurs (10) dans et à partir d'un espace d'empilage de conteneurs (15), sachant que les conteneurs (10) sont transposés pendant que le véhicule de livraison (1) circule ou est à l'arrêt, sachant que le dispositif de remplissage (17) est disposé sur au moins deux axes de déplacement (18) disposés l'un sur l'autre, sachant que les deux axes de déplacement (18) sont placés angulairement l'un par rapport à l'autre.

10. Procédé selon la revendication 9, **caractérisé en ce qu'**au moins un conteneur (10) est transféré selon une destination définie au poste de stockage et/ou de déstockage (6) et/ou est transféré du poste de stockage et/ou de déstockage (6) dans un espace d'empilage de conteneurs (15).

11. Procédé selon la revendication 9, **caractérisé en ce qu'**un conteneur (10) est transféré sur commande d'un conducteur (14) du véhicule de livraison (1) au poste de stockage et/ou de déstockage (6).

12. Procédé selon la revendication 9 ou 10, **caractérisé en ce qu'**un conteneur (10) est transféré à l'aide d'un programme d'acheminement présélectionné et/ou d'un signal GPS au poste de stockage et/ou de déstockage (6) .
